Europäisches Patentamt

European Patent Office

Office européen des brevets

(11) Numéro de publication : **0 381 558 B1**

(12) **FASCICULE DE BREVET EUROPEEN**

(45) Date de publication du fascicule du brevet :
05.08.92 Bulletin 92/32

(21) Numéro de dépôt : **90400212.8**

(22) Date de dépôt : **24.01.90**

(51) Int. Cl.⁵ : **B60B 5/02**, B60B 25/04,
B29D 31/00

(54) **Roue de véhicule en matériau composite.**

(30) Priorité : **30.01.89 FR 8901112**

(43) Date de publication de la demande :
**08.08.90 Bulletin 90/32**

(45) Mention de la délivrance du brevet :
**05.08.92 Bulletin 92/32**

(84) Etats contractants désignés :
**DE FR GB IT**

(56) Documents cités :
**DE-A- 1 924 485**
**FR-A- 919 055**
**FR-A- 932 242**
**US-A- 2 357 000**

(73) Titulaire : **MESSIER BUGATTI**
**Zone aéronautique Louis Bréguet B.P. 40**
**F-78140 Velizy Villacoublay (FR)**
Titulaire : **R. ALKAN & Cie.**
**Rue du 8 mai 1945**
**F-94460 Valenton (FR)**

(72) Inventeur : **Engerand, Jean-Luc**
**31 rue Pierre Curie**
**F-92330 Sceaux (FR)**
Inventeur : **Mattei, Jean-Pierre**
**11bis rue Chavallier**
**F-94210 La Varenne (FR)**

(74) Mandataire : **Fruchard, Guy et al**
**CABINET BOETTCHER 23, rue la Boétie**
**F-75008 Paris (FR)**

## Description

La présente invention concerne une roue de véhicule en composite.

On sait qu'il est souhaitable de réaliser un véhicule, en particulier un avion, avec des composants aussi légers que possible tout en présentant une résistance suffisante pour supporter les contraintes auxquelles ils sont soumis. En particulier, les roues d'avion doivent être en mesure de supporter les contraintes très importantes auxquelles elles sont soumises lors des atterrissages et les roulages au sol. Par ailleurs, on sait que les pneus d'avion ne peuvent pas être déformés de façon suffisante pour faire passer le bord de leur flanc par-dessus le bourrelet de la roue et il est donc nécessaire qu'une roue d'avion soit démontable pour permettre l'introduction du pneu sur la jante. Il est connu à ce propos de réaliser une roue d'avion en alliage léger comportant une jante associée à un moyeu par au moins un flanc et sur laquelle est monté de façon étanche au moins un bourrelet amovible maintenu solidaire de la jante sur un côté de montage de celle-ci par un jonc de fixation.

Afin d'alléger encore les roues de véhicules, on a envisagé de les réaliser en matériau composite, en particulier en fibre de carbone noyé dans une résine organique. Cependant, on s'est rendu compte qu'une jante réalisée en matériau composite n'offrait pas une résistance suffisante pour supporter les contraintes transmises par le jonc de fixation. On a donc envisagé de réaliser des roues en matériau composite comportant deux parties réunies l'une à l'autre selon un plan médian sensiblement perpendiculaire à l'axe de rotation de la roue. Le montage d'un pneu sur les deux parties séparées et leur réunion est toutefois mal aisé et une telle structure ne s'avère donc pas satisfaisante d'un point de vue pratique.

Un but de l'invention est de proposer une roue de véhicule en composite ayant une résistance suffisante et permettant néanmoins un montage aisé du pneu sur la roue.

En vue de la réalisation de ce but, on prévoit selon l'invention une roue de véhicule comportant une jante associée à un moyeu par au moins un flanc et sur laquelle est monté de façon étanche au moins un bourrelet amovible maintenu solidaire de la jante sur un côté de montage de celle-ci par un jonc de fixation, dans laquelle la jante et le flanc sont en matériau composite, et la jante comporte à sa périphérie, sur le côté de montage du bourrelet amovible, une ceinture de montage métallique fixée à la jante et dans laquelle est réalisée une rainure de positionnement du jonc de fixation.

Ainsi, la ceinture de montage métallique assure une résistance suffisante pour supporter les contraintes transmises par le jonc de fixation et l'on profite néanmoins d'un important gain de poids résultant de la réalisation en composite de la jante et du flanc.

Selon une version avantageuse de l'invention, la ceinture de montage a une épaisseur croissante depuis une partie médiane vers un bord de la jante. Ainsi, tout en assurant une surface de contact suffisante entre la ceinture de montage et la jante, et une résistance suffisante de la ceinture de montage au niveau de la rainure de positionnement de fixation, on minimise le poids supplémentaire apporté par le ceinture de montage métallique.

Selon les aspects préférés de l'invention, la ceinture de montage comporte une surface en gradins sur une face en regard de la jante, et elle est collée à la jante ; le bourrelet amovible est réalisé en matériau composite ; la roue comporte deux flancs espacés entre lesquels est disposé au moins un organe de raidissement au voisinage du moyeu.

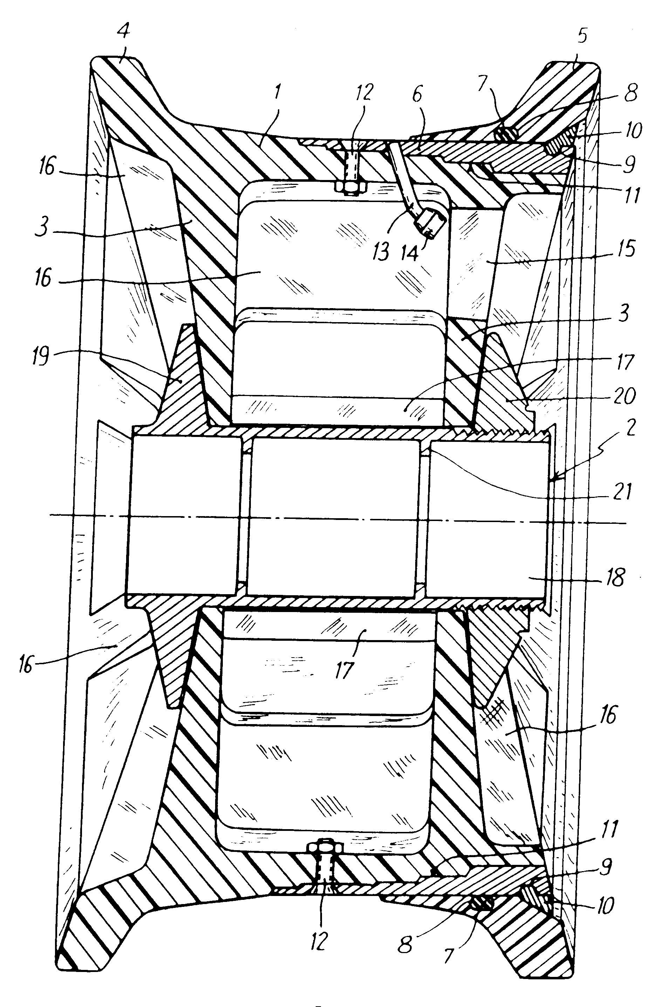

D'autres caractéristiques et avantages de l'invention apparaîtront à la lecture de la description qui suit d'un exemple de réalisation particulier non limitatif de l'invention en liaison avec la figure unique ci-jointe qui est une vue en coupe schématique selon un plan diamétral vertical d'une roue selon l'invention.

En référence au dessin, la roue selon l'invention comporte une jante 1 réalisée en matériau composite associée à un moyen métallique généralement désigné en 2 par des flancs 3 également réalisés en matériau composite en une seule pièce avec la jante 1 et s'étendant perpendiculairement au moyen 2. Un bourrelet circulaire 4 est également réalisé en une seule pièce avec la jante 1 en matériau composite et s'étend radialement vers l'extérieur à partir de celle-ci. Sur un côté de la jante 1 opposé au bourrelet fixe 4, la roue comporte un bourrelet amovible 5 également réalisé en matériau composite.

Le matériau composite utilisé est par exemple un matériau comportant des fibres de carbone à haute résistance liées entre elles par une résine organique.

Une ceinture de montage métallique 6, de préférence une ceinture en titane lorsque le matériau composite est réalisé à partir de fibres de carbone, est fixée à la périphérie de la jante 1 sur le côté de celle-ci servant au montage du bourrelet amovible 5. La face de la ceinture de montage métallique 6 qui est tournée vers le bourrelet amovible 5 est de préférence une surface généralement lisse sur laquelle peut prendre appui un joint d'étanchéité torique 7 disposé dans une rainure circulaire interne 8 du bourrelet 5. Au voisinage de son bord externe, la ceinture de montage 6 comporte une rainure circulaire 9 tournée vers le bourrelet amovible 5 et dans laquelle est engagé un jonc de fixation 10. Sur sa face qui est en regard de la jante 1, la ceinture de montage 6 comporte une surface en gradins 11 disposée pour que la ceinture de montage ait une épaisseur croissante depuis une partie médiane de la jante vers le bord de celle-ci. Un collage de la ceinture métallique 6 sur la jante s'est avéré suffisant pour réaliser une bonne fixation de la ceinture de montage. Toutefois, si on le souhaite, pour améliorer la sécurité d'assemblage, on peut prévoir une série de fixations 12 s'étendant radialement à travers la ceinture métallique et la jante. Bien entendu la jante est également traversée par une tube de gonflage 13 terminé par une valve 14 accessible depuis l'extérieur de la roue à travers une lumière 15 dans l'un des flancs 3.

Les flancs 3 sont espacés l'un de l'autre selon une direction axiale de la roue et la résistance de la roue est de préférence renforcée par des voiles radiaux 16 qui s'étendent entre les flancs 3 et à l'extérieur de ceux-ci.

Dans le mode de réalisation illustré, la résistance de la roue est en outre renforcée par des barrettes de raidissement métalliques ou en composite 17 disposées entre les deux flancs au voisinage du moyeu.

Le moyeu comporte un corps tubulaire 18 équipé à l'une de ses extrémités d'un flasque 19 et au voisinage d'une extrémité opposée d'une bague d'appui démontable 20 fixée au corps tubulaire 18 de façon appropriée, par exemple au moyen d'un filetage. Le corps tubulaire 18 comporte également des nervures annulaires internes 21 destinées à servir d'appui pour les roulements lors du montage de la roue sur son axe de rotation.

Bien entendu l'invention n'est pas limitée au mode de réalisation décrit et on peut y apporter des variantes de réalisation sans sortir du cadre de l'invention tel que défini dans les revendications annexées. En particulier, les deux flancs espacés 3 pourraient être remplacés par un seul flanc ayant une épaisseur suffisante pour assurer la résistance nécessaire de la liaison entre la jante et le moyeu.

De même, bien que dans le mode de réalisation décrit on ait prévu un seul bourrelet amovible 5, on pourrait également réaliser le bourrelet opposé de façon amovible, la jante étant alors équipée d'une seconde bague de montage métallique ou même d'une bague métallique unique servant au montage des deux bourrelets amovibles.

Bien qu'une application de l'invention soit envisagée plus particulièrement pour les roues d'avion, elle peut également être envisagée pour d'autres véhicules en particulier les camions ou les automobiles.

## Revendications

1. Roue de véhicule comportant une jante (1) associée à un moyeu (2) par au moins un flanc (3) et sur laquelle est monté de façon étanche au moins un bourrelet amovible (5) maintenu solidaire de la jante (1) sur un côté de montage de celle-ci par un jonc de fixation (10) caractérisée en ce que la jante (1) et le flanc (3) sont en matériau composite et la jante comporte à sa périphérie, sur le côté de montage du bourrelet amovible (5), une ceinture de montage métallique (6) fixée à la jante et dans laquelle est réalisée une rainure de positionnement (9) du jonc de fixation.

2. Roue de véhicule selon la revendication 1, caractérisée en ce que la ceinture de montage (6) a une épaisseur croissante depuis une partie médiane vers un bord de la jante (1).

3. Roue de véhicule selon la revendication 2, caractérisée en ce que la ceinture de montage comporte une surface en gradins (11) sur une face en regard de la jante (1), et en ce qu'elle est collée à la jante.

4. Roue de véhicule selon l'une des revendications 1 à 3, caractérisée en ce que le bourrelet amovible (5) est en matériau composite.

5. Roue de véhicule selon l'une des revendications 1 à 4, caractérisée en ce qu'elle comporte deux flancs espacés (3) entre lesquels est disposé au moins un organe de raidissement (17) au voisinage du moyeu.

## Patentansprüche

1. Fahrzeugrad, umfassend eine Felge (1), die über wenigstens eine Seitenflanke (3) mit einer Nabe (2) verbunden ist und auf welcher wenigstens ein lösbarer Randwulst (5) abichtend montiert ist, der mit der Felge (1) auf einer Seite derselben durch einen Befestigungsring (10) fest verbunden ist, dadurch gekennzeichnet, daß die Felge und die Seitenflanke (3) aus einem Kompositmaterial hergestellt sind und daß die Felge auf ihrem Umfang auf der Montageseite des lösbaren Randwulstes (5) einen metallischen, an der Felge befestigten Montagegürtel (6) aufweist, an welchem eine Positionierrinne (9) für den Befestigungsring ausgebildet ist.

2. Fahrzeugrad nach Anspruch 1, dadurch gekennzeichnet, daß der Montagegürtel (6) eine von einem mittleren Bereich zum Rand der Felge (1) hin zunehmende Dicke hat.

3. Fahrzeugrad nach Anspruch 2, dadurch gekennzeichnet, daß der Montagegürtel an einer der Felge (1) zugewandten Fläche eine gestufte Oberfläche (11) hat und daß diese mit der Felge verklebt ist.

4. Fahrzeugrad nach einem der Ansprüche 1 bis 3, dadurch gekennzeichnet, daß der lösbare Randwulst (5) aus einem Kompositmaterial besteht.

5. Fahrzeugrad nach einem der Ansprüche 1 bis 4, dadurch gekennzeirhnet, daß es zwei zueinander beabstandete Seitenflanken (3) hat, zwischen denen zumindest ein an der Nabe anliegendes Versteifungselement (17) angeordnet ist.

## Claims

1. A vehicle wheel comprising a rim (1) associated with the hub (2) by at least one side wall (3) and on which removable beading (5) is mounted in sealed manner and fixed to the rim (1) on an assembly side thereof by means of a keeper (10), the wheel being characterized in that the rim (1) and the side wall (3) are made of composite material, and the rim comprises, on its periphery on the side where the removable beading (5) is mounted, a metal mounting belt (6) which is fixed to the rim and in which a positioning groove (9) is provided for the keeper.

2. A vehicle wheel according to claim 1, characterized in that the mounting belt (6) tapers in thickness going away from one of the edges of the rim (1) towards a mid portion thereof.

3. A vehicle wheel according to claim 2, characterized in that the mounting belt has steps (11) in its surface facing the rim (1), and in that it is glued to the rim.

4. A vehicle wheel according to any one of claims 1 to 3, characterized in that the removable beading (5) is made of composite material.

5. A vehicle wheel according to any one of claims 1 to 4, characterized in that it includes two spaced-apart side walls (3) with at least one stiffening member (17) being disposed therebetween in the vicinity of the hub.